(19) Europäisches Patentamt
European Patent Office
Office européen des brevets

(11) **EP 2 822 160 B1**

(12) **EUROPEAN PATENT SPECIFICATION**

(45) Date of publication and mention
of the grant of the patent:
**08.03.2017 Bulletin 2017/10**

(51) Int Cl.:
***H02K 21/12*** *(2006.01)*     ***H02K 29/03*** *(2006.01)*
***H02K 1/27*** *(2006.01)*

(21) Application number: **13382259.3**

(22) Date of filing: **02.07.2013**

(54) **Brushless motor or generator with reduced reluctance torque**

Bürstenloser Motor oder Generator mit reduziertem synchronen Drehmoment

Générateur ou moteur sans balai à couple de réluctance réduite

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**07.01.2015 Bulletin 2015/02**

(73) Proprietor: **Vernis Motors, S.L.**
**08205 Sabadell (ES)**

(72) Inventor: **Lorenzo Escuín, José Luis**
**08205 Sabadell (ES)**

(74) Representative: **Hernández Hernández, Carlos**
**Olten Patentes y Marcas**
**Entença, 332-334 3o-2a**
**08029 Barcelona (ES)**

(56) References cited:
• **DOSIEK L ET AL: "Cogging Torque Reduction in
Permanent Magnet Machines", IEEE
TRANSACTIONS ON INDUSTRY APPLICATIONS,
IEEE SERVICE CENTER, PISCATAWAY, NJ, US,
vol. 43, no. 6, 1 November 2007 (2007-11-01),
pages 1565-1571, XP011197471, ISSN: 0093-9994,
DOI: 10.1109/TIA.2007.908160**
• **DAOHAN WANG ET AL: "Optimization of
Magnetic Pole Shifting to Reduce Cogging
Torque in Solid-Rotor Permanent-Magnet
Synchronous Motors", IEEE TRANSACTIONS ON
MAGNETICS, IEEE SERVICE CENTER, NEW
YORK, NY, US, vol. 46, no. 5, 1 May 2010
(2010-05-01), pages 1228-1234, XP011304359,
ISSN: 0018-9464, DOI:
10.1109/TMAG.2010.2044044**
• **BRETÓN BRETON C ET AL: "Influence of Machine
Symmetry on Reduction of Cogging Torque in
Permanent-Magnet Brushless Motors", IEEE
TRANSACTIONS ON MAGNETICS, IEEE
SERVICE CENTER, NEW YORK, NY, US, vol. 36,
no. 5, 1 September 2000 (2000-09-01),
XP011032487, ISSN: 0018-9464**

**Description**

## OBJECT OF THE INVENTION

The object of the invention herein, as established in the title, is a brushless motor or generator with reduced reluctance torque with magnets inserted in the rotor and a number of slots relative to the fractional number of poles.

The rotor design and particularly the distribution of the poles in the rotor in order to reduce the reluctance torque in brushless motors and generators characterises the invention herein.

Therefore, this invention is confined within the scope of brushless motors and generators, and particularly among those in which the ratio of the number of slots to the number of poles is a fractional number, and more specifically, those aiming to reduce the reluctance torque.

## BACKGROUND OF THE INVENTION

The presence of protruding poles on the rotors results in a reluctance torque, which is the torque required to achieve the ignition advance of the rotor, which is one of the causes of the so-called magnetic noise that results from continuous torque that has to be exceeded in the rotation of the rotor.

In the state of the art is know the article: DOSIEK LETAL: "Cogging Torque Reduction in Permanent Magnet Machines", IEEE TRANSACTIONS ON INOUSTRY APPLICATIONS, IEEE SERVICE CENTER, PISCATAWAY, NJ, US, vol. 43, no. 6, 1 November 2007 (2007-11-01), pages 1565-1571, XP011197471, ISSN: 0093-9994, 001: 10.11 09/TIA.2007.908160.

Therefore, the object of the invention herein is to reduce the reluctance torque in a motor or generator, in which there is a fractional ratio of the number of stator slots to the number of rotor poles, creating a rotor geometry such as that described below and is contained in its essential nature in the first claim.

## DESCRIPTION OF THE INVENTION

The object of the invention herein is to provide a brushless motor or generator having a reduced reluctance torque, and in which the ratio of the number of stator slots to the number of rotor poles is fractional.

To achieve the aforementioned motor or generator with reduced reluctance torque, the rotor is constructed with a pole-free zone, the result of adding the fractional part of dividing the number of stator slots by the number of poles of the rotor to the space between magnets, i.e. it is an area between poles with an increased angle.

(N) being the number of stator slots and (P) being the number of rotor poles with magnets inserted, where (N) and (P) are values such that their (N/P) ratio is fractional, the fractional part (Y) being defined as

$$Y = (N/P) - Ent(N/P)$$

wherein Ent(N/P) is the integer part of the quotient of the number of slots between the number of poles, and the pole-free area ($\beta$) is obtained from:

$$Pole\text{-}free\ zone\ (\beta) = (360/N)*Y$$

Therefore, the rotor geometry shall be such that the magnets inserted in the poles are evenly distributed, separated from each other at an angle ($\alpha$), all but two of the poles that are spaced at an angle ($\alpha+\beta$).

That is, the area between poles has a constant and uniform value in all cases except for between two of the magnets, which has an area between poles increased by a ($\beta$) value.

Since the space between poles is not uniform around the rotor, dynamic imbalances occur. In the invention, the aforementioned imbalances are compensated with a recess made in diametrically opposite areas to the increased space between poles. The recess to compensate the imbalance may already be defined in the designed part, in other words, when the plate is obtained from the die, this recess is already incorporated. The recess may also be subsequently incorporated after the rotor has been made.

In another possible embodiment, the aforementioned imbalances are compensated by providing material in the increased area between poles or pole-free zone.

## EXPLANATION OF THE FIGURES

As a complement of the description being made and for a better understanding of the characteristics of the invention, according to an example of a practical preferred embodiment thereof, attached as an integral part of the aforementioned description is a set of drawings where, for purposes of illustration and in a non-limiting manner, the following is shown:

Figure 1 shows a rotor plate in one of many possible embodiments.

Figure 2 shows full view of a complete rotor in a construction variant.

## PREFERRED EMBODIMENT OF THE INVENTION

In view of the figures, a preferred embodiment of the proposed invention is described below.

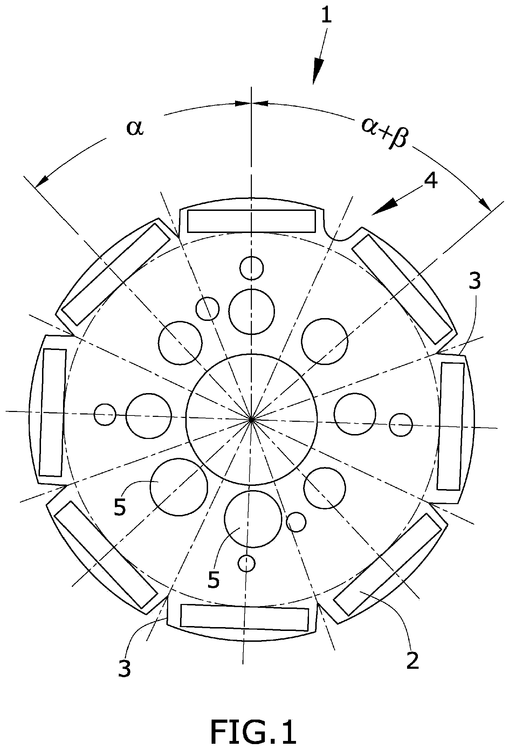

Figure 1 shows a rotor (1) that have a plurality of poles with magnets (2) inserted, wherein the area between poles (3) is regular except between two poles that have an increased area between poles or pole-free zone (4).

The value of the increased area between poles or pole-free zone (4) is the value of the increased area between poles (3) at an angle (β) obtained from the fractional part (Y) after subtracting the fraction of the number of slots between the number of poles minus the integer part of said ratio, as seen in the following expression:

$$Y = (N/P) - Ent(N/P)$$

Obtaining (β) as:

$$(\beta) = (360/N)^*Y$$

Figure 1 shows that the separation between all the magnets (2) has a constant value (α), and that in one case has a value of (α+β), as the increased area between poles or pole-free zone (4) has increased to a value of (β).

As a consequence of the lack of uniformity in the distribution of the magnets, dynamic imbalances occur, which in one possible embodiment are compensated by means of recesses (5) made on the rotor body in the area opposite the increased area between poles or pole-free zone (4). These recesses, as indicated above, may be defined in the designed part or can be subsequently incorporated.

By using this configuration described, a rotor is obtained from the die that has a pole-free zone and a number of recesses for dynamic compensation produced by the lack of uniformity in the distribution of the magnets.

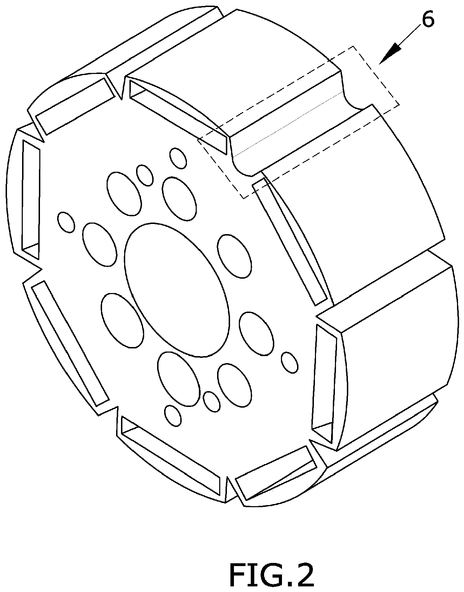

Figure 2 shows the rotor in perspective, and wherein alternately, additional material is arranged to offset the dynamic imbalance caused in the increased area between poles or pole-free zone (4) in the notch itself (6) or recess. The function of said longitudinal notches (6) is to saturate this area of the rotor plate to prevent the recirculation of the flow from magnet to magnet, thereby improving closure thereof through the stator.

## Claims

1. Brushless motor or generator, in which the ratio of the number of stator slots to the number of rotor poles (3) is fractional **characterised in that** the rotor has a pole-free zone (4) so that the poles next to that pole-free zone (4) are separated by an angle α+β, which is a separation angle α of the rest of the poles, increased by angle β, wherein: angle β = $(360/N)^*Y$ Wherein (N) is the number of stator slots and (Y) is the fractional part being defined as:

$$Y = (N/P) - Ent (N/P)$$

With (P) being the number of rotor poles (3) with magnets inserted, (N) and (P) being values such that their (N/P) ratio is fractional, and Ent (N/P) being the integer part of the quotient of the number of slots between the number of poles, (3) wherein on the rotor body (1) in the area opposite the pole-free zone (4), one or more recesses (5) are made to compensate the dynamic imbalances.

2. Brushless motor or generator according to claim 1, **characterised in that** the recess (5) can be defined, when the plate is obtained from the die or, subsequently, when the rotor has been made.

## Patentansprüche

1. Bürstenloser Motor oder Generator, in dem das Verhältnis der Anzahl von Statornuten zu der Anzahl von Rotorpolen (3) bruchzahlig ist, **dadurch gekennzeichnet, dass** der Rotor eine polfreie Zone (4) aufweist, so dass die Pole neben dieser polfreien Zone (4) durch einen Winkel α + β getrennt sind, der einem Trennwinkel α der übrigen Pole erhöht um einen Winkel β entspricht, wobei

$$Winkel\ \beta = (360/N)^*Y$$

Wobei (N) die Anzahl der Statornuten ist und (Y) der Bruchteil ist, der definiert ist als:

$$Y = (N/P) - Ent (N/P)$$

Wobei (P) die Anzahl der Rotorpole (3) mit eingesetzten Magneten ist, (N) und (P) solche Werte sind, dass ihr (N/P)-Verhältnis bruchzahlig ist, und Ent (N/P) der ganzzahlige Teil des Quotienten aus der Anzahl von Nuten und der Anzahl von Polen (3) ist, wobei an dem Rotorkörper (1) in dem Bereich gegenüber der polfreien Zone (4) eine oder mehrere Vertiefungen (5) ausgeführt ist/sind, um die dynamische Unwucht auszugleichen.

2. Bürstenloser Motor oder Generator nach Anspruch 1, **dadurch gekennzeichnet, dass** die Vertiefung (5) definiert werden kann, wenn die Platte von der Pressform erhalten wird, oder anschließend, nachdem der Rotor hergestellt wurde.

**Revendications**

1. Générateur ou moteur sans balais, dans lequel le rapport du nombre de fentes de stator au nombre de pôles de rotor (3) est fractionnaire, **caractérisé en ce que** le rotor dispose d'une zone sans pole (4) de sorte que les pôles proches de cette zone sans pôle (4) soient séparés par un angle $\alpha + \beta$, qui est un angle de séparation $\alpha$ du reste des pôles, additionné d'un angle $\beta$, dans lequel :

$$angle\ \beta = (360/N)*Y$$

dans lequel (N) est le nombre de fentes de stator et (Y) est la partie fractionnaire définie comme :

$$Y = (N/P) - Ent\ (N/P)$$

avec (P) étant le nombre de pôles de rotor (3) avec des aimants insérés, (N) et (P) étant des valeurs telles que leur rapport (N/P) est fractionnaire et Ent (N/P) étant la partie entière du quotient du nombre de fentes entre le nombre de pôles (3), dans lequel, sur le corps de rotor (1) dans la surface opposée à la zone sans pôle (4), un ou plusieurs évidements (5) sont ménagés pour compenser les déséquilibres dynamiques.

2. Générateur ou moteur sans balais selon la revendication 1, **caractérisé en ce que** l'évidement (5) peut être défini lorsque la plaque est obtenue depuis la matrice ou, par la suite, lorsque le rotor a été fabriqué.

FIG.1

FIG.2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Cogging Torque Reduction in Permanent Magnet Machines. **DOSIEK L et al.** IEEE TRANSACTIONS ON INOUSTRY APPLICATIONS. IEEE SERVICE CENTER, 01 November 2007, vol. 43, 1565-1571